Europäisches Patentamt

European Patent Office

Office européen des brevets

(11) Veröffentlichungsnummer: **0 362 648**
**A2**

## (12) EUROPÄISCHE PATENTANMELDUNG

(21) Anmeldenummer: **89117615.8**

(22) Anmeldetag: **23.09.89**

(51) Int. Cl.5: **B29C 45/00**

(30) Priorität: **06.10.88 DE 3833975**

(43) Veröffentlichungstag der Anmeldung:
**11.04.90 Patentblatt 90/15**

(84) Benannte Vertragsstaaten:
**DE FR GB IT NL**

(71) Anmelder: **BAYER AG**

**D-5090 Leverkusen 1 Bayerwerk(DE)**

(72) Erfinder: **Menges, Georg, Prof. Dr.-Ing.**
**Am Beulardstein 19**
**D-5100 Aachen(DE)**
Erfinder: **Schacht, Thomas, Dr.-Ing.**
**Clermontstrasse 87**
**D-5100 Aachen(DE)**
Erfinder: **Stephan, Ott, Dipl.-Ing.**
**Aureliusstrasse 40**
**D-5100 Aachen(DE)**
Erfinder: **Becker, Heiner**
**Jakobstrasse 214**
**D-5100 Aachen(DE)**
Erfinder: **Sommer, Sebastien**
**Goethestrasse 3**
**D-5210 Troisdorf(DE)**
Erfinder: **Schmidt, Christoph, Dipl.-Ing.**
**Bornblick 5**
**D-2000 Hamburg 71(DE)**
Erfinder: **Bangert, Hartmut, Dr.**
**Neuenkamp 11a**
**D-5653 Leichlingen(DE)**

(54) **Verfahren zum Herstellen von Formteilen.**

(57) Ist bei Herstellung von Formteilen aus viskosen Kunststoffschmelzen die Bildung von Bindenähten nicht vermeidbar, so wird deren Festigkeit dadurch verbessert, daß während des Füllvorganges die Fließrichtung mindestens eines der Schmelzeströme im Bereich der sich bildenden Bindenaht mindestens einmal verändert wird, wobei die Fließnahtfläche (10) über ihre Höhe eine Krümmung erfährt.

FIG.3

EP 0 362 648 A2

# Verfahren zum Herstellen von Formteilen

Die Erfindung betrifft ein Verfahren zum Herstellen von Formteilen aus viskosen Kunststoffschmelzen, insbesondere Liquid-Crystal-Polymerschmelzen, in einem Formwerkzeug, wobei während des Formfüllvorganges innerhalb des Formhohlraumes mindestens zwei Schmelzeströme aufeinandertreffen und eine Bindenaht bilden, wobei während des Formfüllvorganges die Fließrichtung mindestens eines der Schemzeströme im Bereich der sich bildenden Bindenaht mindestens einmal verändert wird.

Bei der Herstellung von Spritzgußformteilen wird Kunststoffschmelze unter Druck durch eine oder mehrere Düsen in ein temperiertes Formwerkzeug gespritzt und erstarrt in dessen Formhohlraum. Bei Verwendung von thermoplastischem Material liegt die Temperatur des Formwerkzeuges unterhalb der Erstarrungstemperatur; werden hingegen duroplastische Materialien verarbeitet, so werden die thermoplastischen Vorprodukte im Plastifizieraggregat aufgeschmolzen, in den heißen Formhohlraum eingespritzt und härten dort aus.

Während des Formfüllvorganges tritt die Schmelze über ein Anguß- oder Verteilersystem in den Formhohlraum ein.

Dort breitet sie sich je nach Fließwiderstand unterschiedlich schnell in verschiedene Richtungen aus. Treffen während des Formfüllvorganges zwei Teilströme aufeinander, so bilden sich Bindenähte, die aufgrund einer unzureichenden Verschweißung zu sichtbaren Markierungen auf der Formteiloberfläche führen und zugleich verminderte Festigkeiten aufweisen. Hervorgerufen werden solche Bindenähte zum einen durch komplizierte Formhohlraumgeometrie, wodurch der Schemzestrom in Teilströme aufgeteilt wird, und zum anderen durch die Verwendung mehrerer Anschnitte bzw. Einspritzstellen. Obwohl bei einem solchen Verfahren (EP-A-02 05 710) während des Füllvorganges die Fließrichtung mindestens einer der Schemzeströme im Bereich der sich bildenden Bindenaht eine Änderung erfährt, wird dabei keine Festigkeitserhöhung der Bindenaht erzielt. Die Schwäche solcher Bindenähte ist für Formteile aus Liquid-Crystal-Polymerschmelzen besonders charakteristisch, weil hier besonders lange Orientierungs-Relaxationszeiten auftreten.

Es besteht die Aufgabe, das Verfahren der eingangs genannten Art dahingehend zu verbessern, daß die Festigkeit von Formteilen im Bereich der Bindenähte wesentlich erhöht wird.

Diese Aufgabe wird dadurch gelöst, daß die Fließnahtfläche über ihre Höhe eine Krümmung erfährt.

Durch diese einfache Maßnahme wird eine überraschende Festigkeitserhöhung im Bindenahtbereich erzielt, welche der Festigkeit von Formteilen aus gleichem Werkstoff ohne Bindenaht nahekommt.

Soweit zwei oder mehr getrennte Schmelzeströme in den Formhohlraum eingeführt werden, wird die Krümmung vorzugsweise durch Änderung des Volumens des betreffenden Schmelzestromes erzielt.

Dies läßt sich dadurch erreichen, daß bei zwei oder mehr Einspritzstellen das Volumen eines einzutragenden Schmelzestromes verändert wird, indem man dessen Einspritzquerschnitt erweitert oder verkleinert, nachdem strom, im Querschnitt gesehen, parabelförmig in den sich die Fließfronten berührt haben. Wird der Einspritzquerschnitt vergrößert, so drückt dieser Schmelzeanderen hinein; wird der Schmelzestrom verkleinert, so drückt der andere unveränderte Schmelzestrom in den verkleinerten hinein.

Das neue Verfahren ist auch durchführbar, wenn nur ein einziger Schmelzestrom in den Formhohlraum eingeführt wird, aber im Formhohlraum durch besondere Geometrien eine Aufteilung des Schmelzestromes beispielsweise durch einen Kern oder sonstige Hindernisse auftritt. Man muß dann die Einspritzstelle so legen, daß bei der Teilung des Schmelzestromes an einem solchen Hindernis Teilströme in solcher Veränderung entstehen, daß die gewünschte Wirkung erzielt wird.

Es versteht sich, daß hierzu eine besondere Lage der Einspritzstelle gewählt werden muß, welche jeweils von der Formhohlraumgeometrie abhängig ist und durch rechnerische Simulation des Füllvorganges oder erforderlichenfalls empirisch ermittelt werden muß. Natürlich läßt sich diese Variante auch bei Einführung mehrerer Schmelzeströme in den Formhohlraum in analoger Weise durchführen.

In jedem Falle ergibt sich eine umso stärkere Krümmung der Fließnahtfläche je stärker die Veränderung eines Schmelzestromes ist.

Gemäß einer alternativen Durchführungsform, gegebenenfalls auch in Kombination mit der ersten, wird die Krümmung durch Bilden und/oder Entleeren eines mit dem Formhohlraum verbundenen Hilfshohlraumes mittels eines in diesem Hilfshohlram geführten Kolbens bewirkt. Die Veränderung des im Bereich des Hilfshohlraumes fließenden Schmelzestromes geschieht einmal durch Fällen dieses Hilfshohlraumes entweder bei vorher zurückgezogenem Kolben oder durch Ansaugen mittels des Kolbens, und zum anderen, indem der Kolben in dem Hilfshohlraum befindliche Schmelze wieder austößt, wodurch das Volumen des vorbeifließenden Schmelzestromes im ersten Falle vermindert und im zweiten Falle wieder erhöht wird.

Gemäß einer weiteren besonderen Durchführungsform des neuen Verfahrens wird die Krümmung durch eine wechselweise Änderung der Fließrichtungen der Schemelzeströme bewirkt.

Auf diese Weise erfährt die Fließnahtfläche über ihre Länge abwechselnd eine Krümmung zur einen und zur anderen Seite. Es versteht sich, daß diese abwechselnde Veränderung so langsam erfolgen muß, daß sich die Krümmung jeweils ausbilden kann.

Diese wechselweise Änderung der Fließrichtung der Schmelzeströme läßt sich durch wechselweise Änderung der Volumen der Schmelzeströme oder durch entsprechend langsame Pulsation bewerkstelligen.

Im ersten Falle läßt sich die Änderung der Volumenströme durch periodisches Drosseln des einen oder anderen Schmelzestromes erzielen, im zweiten Falle läßt sich die Pulsation mittels eines an geeigneter Stelle des Formhohlraumes in einer Bohrung bzw. einem Hilfshohlraum geführten Kolbens ausüben. Der Kolben läßt sich dabei vorzugsweise in den Formhohlraum hineinbewegen.

Es sollte sich dabei um eine Pulsation mit sehr niedriger Frequenz und großer Amplitude handeln. Im Gegensatz dazu würde eine Vibration keinen Erfolg bringen.

In einer Zeichnung ist eine Vorrichtung zur Herstellung eines Formteils aus flüssigkristallinem Kunststoff nach dem neuen Verfahren rein schematisch dargestellt und nachstehend näher beschrieben, sowie die Ergebnisse der entnommenen Proben in einem Diagramm festgehalten. Es zeigen:

Fig. 1 das Prinzip eines Einspritzsystems mit zwei Einspritzstellen,

Fig. 2 eine Draufsicht auf den Formhohlraum eines Formwerkzeuges,

Fig. 3 die Krümmung der Fließnahtfläche der Bindenaht einer gefertigten Platte in räumlicher Darstellung,

Fig. 4 die Lage der entnommenen Proben in der gefertigten Platte,

Fig. 5 die Zugfestigkeit in Abhängigkeit von der Probenlage in der Platte im Vergleich bei Fertigung nach dem herkömmlichen (A) und neuen Verfahren (B) und

Fig. 6 einen Vergleich des Verlaufes der Fließfronten und Lage der Fließnahtflächen mit herkömmlicher und erfindungsgemäßer Lage der Einspritzstellen in bezug auf ein strömungstechnisches Hindernis im Formhohlraum.

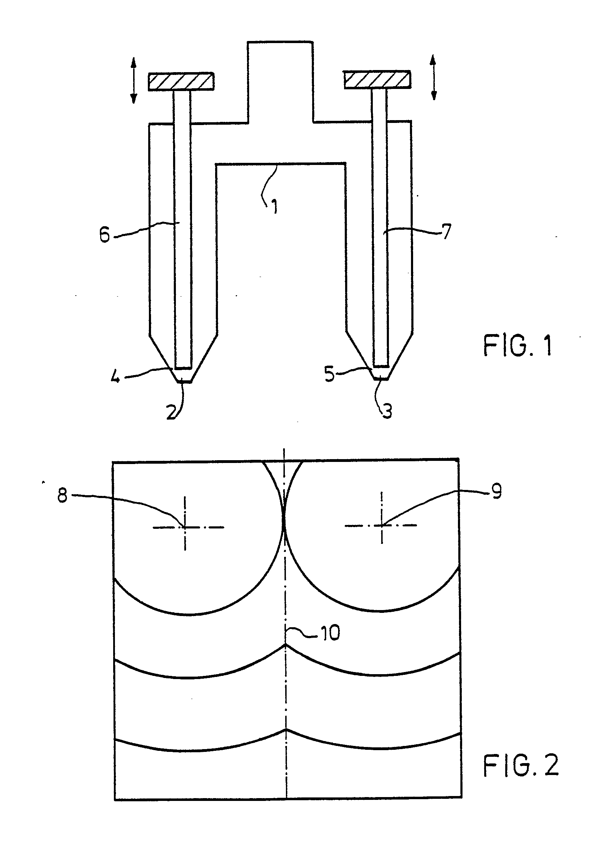

In Fig. 1 besteht ein Einspritzsystem aus einer an eine nicht dargestellte Spritzgießmaschine anschließende Verzweigung 1 mit Düsenöffnungen 2, 3, deren Durchströmquerschnitte 4, 5 mittels verstellbarer Nadeln 6, 7 veränderbar sind, wodurch sich die pro Zeiteinheit durchströmenden Volumen der Schmelzeströme verändern lassen. Dieses Einspritzsystem ist in der Regel in Form von Kanälen in der oberen Formwerzeughälfte vorgesehen.

In Fig. 2 sind die Einspritzstellen, welche der Lage der Düsenöffnungen 2, 3 entsprechen, mit 8 und 9 bezeichnet.

Die Schmelzeströme breiten sich nach Art von Quellströmungen aus und treffen zur Fließnahtfläche 10, welche durch eine strichpunktierte Linie symbolisiert ist, zusammen. Die Fließnahtfläche 10 bildet später die kritische Bindenaht.

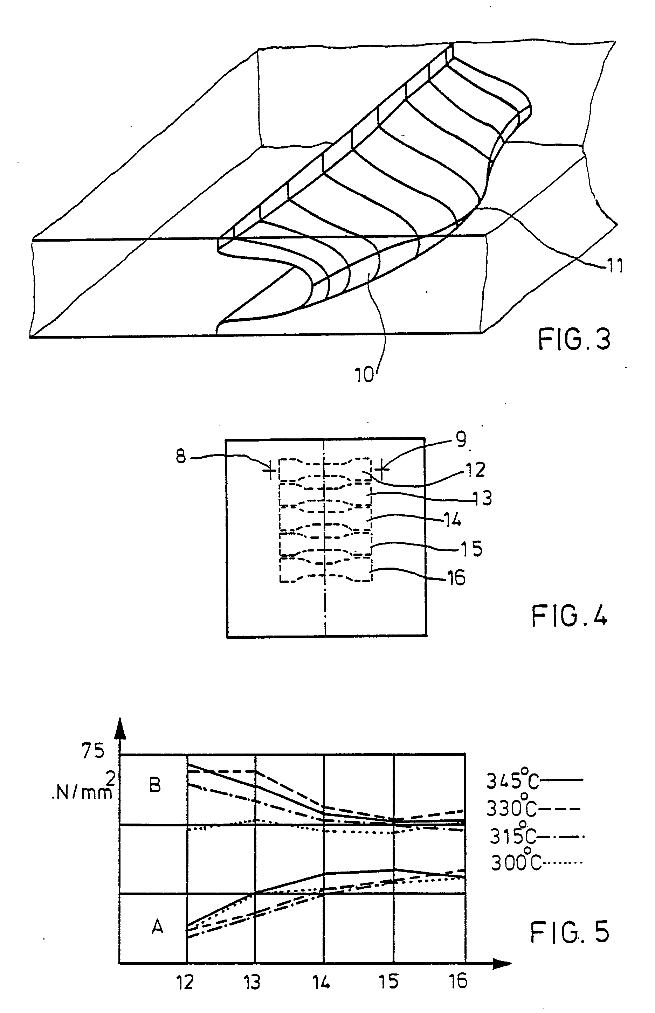

In Fig. 3 schließlich ist die Krümmung der Fließnahtfläche 10 ersichtlich, und zwar mit einer zusätzlichen Ausbeulung 11 in Querrichtung, welche auf eine temporäre zusätzliche Vergrößerung des Volumens des linken Schmelzestromes hinweist, da sich das größere Volumen nach rechts ausgebreitet hat.

In |Fig. 4 ist die Lage der entnommenen Proben entlang der Hauptfließrichtung in der hergestellten Platte zu sehen. Die Proben bzw. ihre Lagen sind mit 12, 13, 14, 15 und 16 bezeichnet, die Einspritzstellen wiederum mit 8 und 9.

In Fig. 5 ist die Zugfestigkeit in Abhängigkeit von der Lage der Proben 11 bis 16 gemäß Fig. 4 ersichtlich. Es wurden Platten bei verschiedenen Schmelzetemperaturen hergestellt, und zwar einmal nach dem herkömmlichen Verfahren ohne Veränderung der Fließrichtung eines Schmelzestromes (Kurvenschar A), und einmal nach dem neuen Verfahren (Kurvenschar B). Aus diesen Platten wurden Zugstäbe gemäß DIN 53 448 gefräst und in einem Zugversuch bei Standardbedingungen (Raumtemperatur, Abzugsgeschwindigkeit 2 mm pro Sekunde) auf ihre Zugfestigkeit untersucht. Aus dem Diagramm ergibt sich deutlich, daß die nach dem neuen Verfahren hergestellten Platten wesentlich bessere Zugfestigkeit im Bindenahtbereich aufweisen, welche der Zugfestigkeit von bindenahtfreien Formteilen sehr nahekommt.

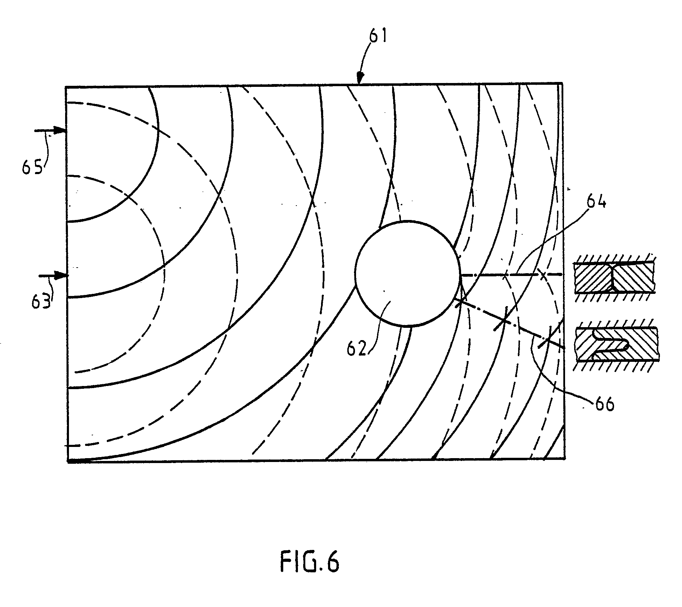

In Fig. 6 ist die Draufsicht auf einen Formhohlraum 61 mit einem Hindernis 62 gezeigt. Von der in herkömmlicher Weise in der Symmetrieebene angeordneten Einspritzstelle 63 verläuft die Fließfront des Schmelzestromes gemäß den gestrichelten Linien. Am Hindernis 62 teilt sich der Schmelzestrom in zwei gleich große Schmelzeströme, welche hinter dem Hindernis 62 wieder zusammenfließen und die Bindenaht 64 bilden. Ihre Form ist rechts im Querschnitt dargestellt. Bei der erfindungsgemäßen Wahl der Lage der Einspritzstelle 65 außerhalb der Symmetrieebene schiebt sich die Fließfront des Schmelzestromes gemäß den durchgezogenen Linien vor. Er teilt sich am Hindernis 62 in zwei Ströme unterschiedlichen Volumens, wodurch die Bindenaht 66 verlagert wird und die daneben dargestellte Querschnittsform erhält. Die Bindenaht 66 ist dabei nur in der Nähe der Oberflächen des Formteils ausgeprägt; im dazwischenliegenden Bereich ist sie sozusagen vom stärkeren Schmelzestrom durchströmt.

**Ansprüche**

1. Verfahren zum Herstellen von Formteilen aus viskosen Kunststoffschmelzen, insbesondere Liquid-Crystal-Polymerschmelzen, in einem Formwerkzeug, wobei während des Formfüllvorganges innerhalb des Formhohlraumes mindestens zwei Schmelzeströme aufeinandertreffen und eine Bindenaht bilden, wobei während des Formfüllvorganges die Fließrichtung mindestens eines der Schmelzeströme im Bereich der sich bildenden Bindenaht mindestens einmal verändert wird, dadurch gekennzeichnet, daß die Fließnahtfläche über ihre Höhe eine Krümmung erfährt.

2. Verfahren nach Anspruch 1, dadurch gekennzeichnet, daß die Krümmung durch Änderung des Volumens des betreffenden Schmelzestromes erzielt wird.

3. Verfahren nach Anspruch 1, dadurch gekennzeichnet, daß die, Krümmung durch Bilden und/oder Entleeren eines mit dem Formhohlraum verbundenen Hilfshohlraumes mittels eines in diesem Hilfshohlraum geführten Kolbens bewirkt wird.

4. Verfahren nach Anspruch 1, dadurch gekennzeichnet, daß die Krümmung durch eine wechselweise Änderung der Fließrichtung der Schmelzeströme bewirkt wird.

5. Verfahren nach Anspruch 4, dadurch gekennzeichnet, daß die wechselweise Änderung der Fließrichtungen der Schmelzeströme durch wechselweise Änderung der Volumen der Schmelzeströme bewirkt wird.

6. Verfahren nach Anspruch 4, dadurch gekennzeichnet, daß die wechselweise Änderung der Fließrichtungen der Schmelzeströme durch Pulsation bewirkt wird.

7. Verfahren nach einem der Ansprüche 1 bis 6, dadurch gekennzeichnet, daß die Änderung der Fließrichtung des Schmelzestromes durch spezielle Lage der Einspritzstelle in bezug auf die Formhohlraumgeometrie bewirkt wird.

FIG. 1

FIG. 2

LeA 26407

FIG.3

FIG.4

345°C ———
330°C – – –
315°C –·–·–
300°C ·······

FIG. 5

FIG.6